# EUROPÄISCHE PATENTSCHRIFT

(11) **EP 4 438 250 B1**
(45) Veröffentlichungstag und Bekanntmachung des Hinweises auf die Patenterteilung: **17.12.2025**
(21) Anmeldenummer: 24000037.2
(22) Anmeldetag: 25.03.2024
(51) Int. Cl.: B25J 15/04, B25J 19/00

(54) **WERKZEUGWECHSLERGRUPPE MIT ZWEI FÜGETEILEN**
TOOL CHANGER GROUP WITH TWO PARTS TO BE JOINED
GROUPE DE CHANGEUR D'OUTILS COMPRENANT DEUX PIÈCES D'ASSEMBLAGE

(30) Priorität: 30.03.2023 DE 102023001277
(43) Veröffentlichungstag der Anmeldung: 02.10.2024
(73) Patentinhaber: Zimmer, Günther, 77866 Rheinau (DE); Zimmer, Martin, 77866 Rheinau (DE)
(72) Erfinder: Zimmer, Günther, 77866 Rheinau (DE); Zimmer, Martin, 77866 Rheinau (DE)
(74) Vertreter: Thämer, Wolfgang

(56) Entgegenhaltungen:
- DE-A1- 19 938 114
- DE-U1- 20 018 124
- JP-A- S63 306 891

## Beschreibung

Die Erfindung betrifft eine Werkzeugwechslergruppe mit zwei trennbar miteinander gegenseitig zentriert gefügten Fügeteilen, wobei die beiden Fügeteile in einer Kontaktzone mittels magnetischer Feldkraft mindestens eines einen Permanentmagneten aufweisenden Fügemagneten aneinandergepresst sind und wobei zumindest in einem der Fügeteile eine temporär zuschaltbare Magnetfeld-Erzeugungsvorrichtung angeordnet ist, deren im zugeschalteten Zustand erzeugte Magnetfeldkraft zum Trennen der Fügeteile voneinander der magnetischen Feldkraft des Permanentmagneten entgegengesetzt gerichtet ist.

Aus der DE 200 18 124 U1 ist ein Werkzeugwechsler bekannt.

Eine Medienübertragung erfolgt über einzelne Steckverbinder, die innerhalb der Magneten angeordnet sind.

Weitere robotische Konnektoren sind aus JP 863 306891 A und DE 199 38 114 A1 bekannt.

Der vorliegenden Erfindung liegt die Problemstellung zugrunde, die Einsatzmöglichkeiten einer Werkzeugwechslergruppe zu erweitern.

Diese Problemstellung wird mit den Merkmalen des Hauptanspruches gelöst. Dazu sind in einem ersten der Fügeteile eine erste Tragringeinheit und in einem zweiten der Fügeteile eine zweite Tragringeinheit, das einzelne Fügeteil abdichtend, angeordnet. Mindestens eine der Tragringeinheiten ist konzentrisch zu diesem Fügemagneten diesen umgreifend angeordnet. Die beiden Tragringeinheiten weisen aneinander druckbelastet anliegende elektrische Kontaktelemente und Gegenkontaktelemente auf, die die beiden Fügeteile elektrisch miteinander verbinden.

Die Anordnung der elektrischen Kontakte außerhalb des Fügemangnets hat zur Folge, dass die maximale Anzahl der elektrischen Kontakte von der Größe des Magneten abhängig ist. Die einzelnen elektrischen Kontakte können hierbei auf einem gemeinsamen Teilkreis angeordnet sein. Sie können gleichmäßig voneinander beabstandet sein oder in Gruppen angeordnet sein. Hierbei können die Abstände so ausgebildet sein, dass beispielsweise Daten- und Signalleitungen interferenzfrei von Leitungen zur Übertragung elektrischer Leistungen angeordnet sind. Die Druckbelastung der Kontaktelemente und der Gegenkontaktelemente relativ zueinander sichert auch bei geringen Strömen eine ausfallsichere Übertragung.

Die Fügeteile sind einzeln vollständig gegen Staub und Flüssigkeiten abgedichtet. Außerdem sind die Oberflächen der Fügeteile derart ausgebildet, dass Verschmutzungen nicht dauerhaft anhaften und die Oberflächen problemlos zu reinigen sind. Die Werkzeugwechslergruppe kann daher z.B. im Lebensmittelbereich und im pharmazeutischen Bereich eingesetzt werden.

Weitere Einzelheiten der Erfindung ergeben sich aus den Unteransprüchen und der nachfolgenden Beschreibung schematisch dargestellter Ausführungsformen.
- Figur 1:: Werkzeugwechslergruppe von der Roboterseite;
- Figur 2:: Figur 1 von der Werkzeugseite;
- Figur 3:: Schnitt der Figur 1;
- Figur 4:: Normalschnitt zu Figur 3;
- Figur 5:: Festteil;
- Figur 6:: Schnitt von Figur 5;
- Figur 7:: Tragringeinheit des Festteils;
- Figur 8:: Schnitt der Figur 7;
- Figur 9:: Festteil bei herausgenommener Tragringeinheit;
- Figur 10:: Losteil;
- Figur 11:: Schnitt von Figur 10;
- Figur 12:: Tragringeinheit des Losteils;
- Figur 13:: Schnitt der Figur 12;
- Figur 14:: Losteil bei herausgenommener Tragringeinheit;
- Figur 15:: Losteilaufnahme des Magazins;
- Figur 16:: Festteil mit Medienkupplungsteil;
- Figur 17:: Losteil mit Medienkupplungsteil.

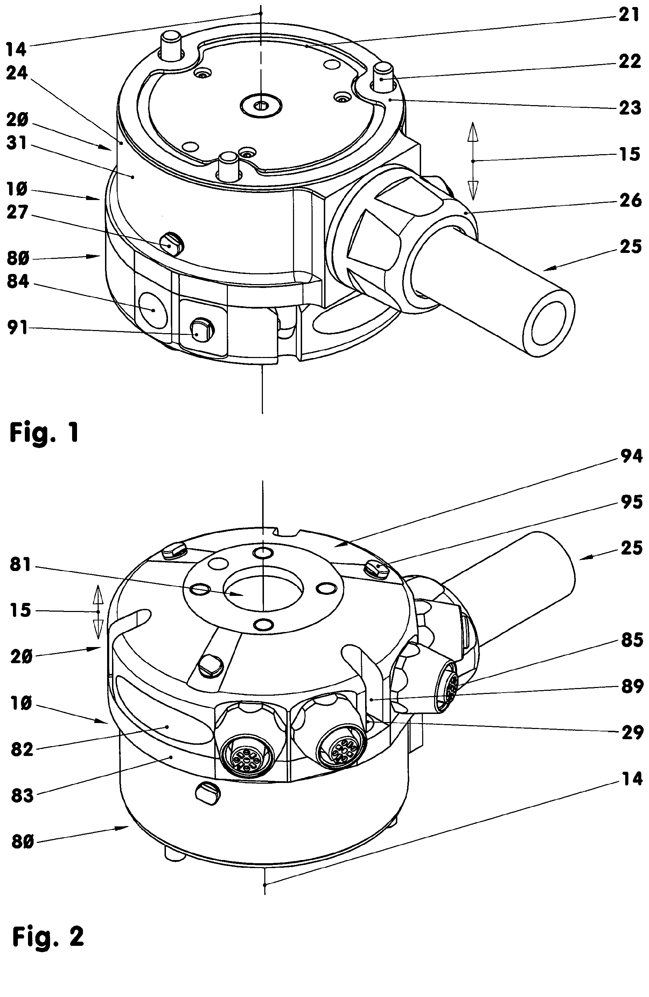

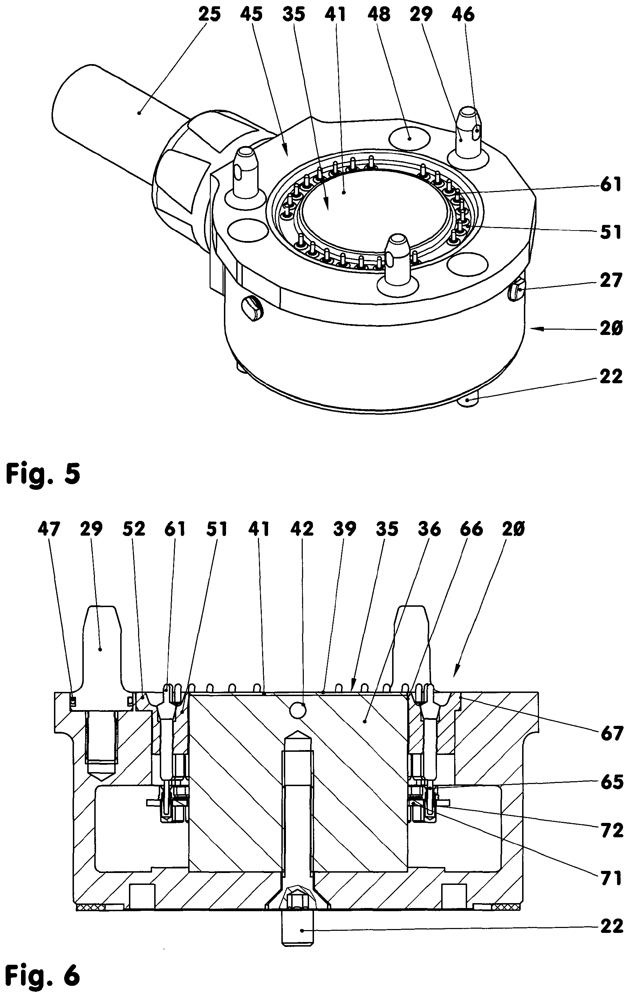

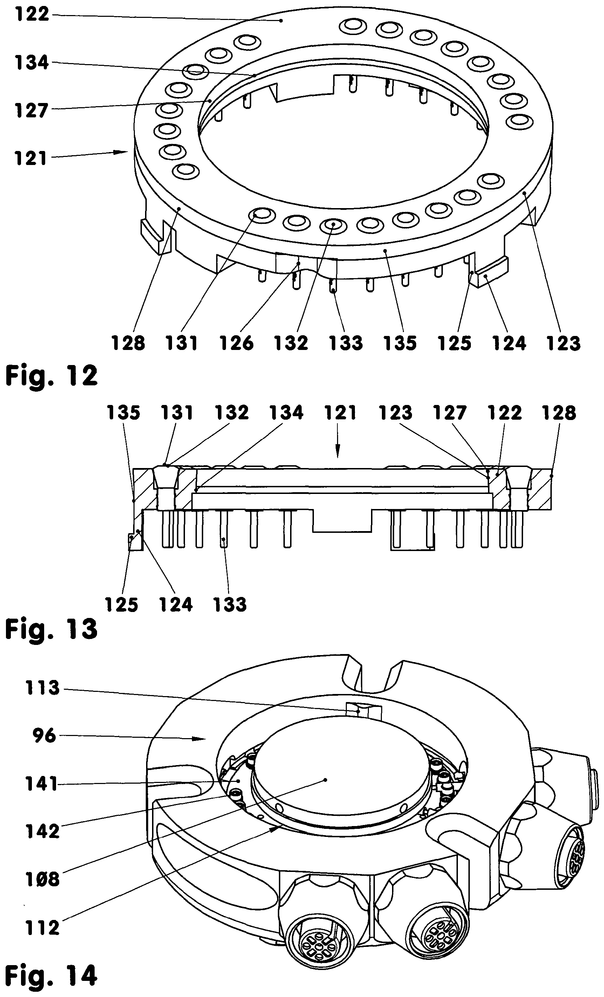

Die Figuren 1 - 14 zeigen eine Werkzeugwechslergruppe (10). Derartige Werkzeugwechslergruppen (10) werden an Industrierobotern eingesetzt, um einen schnellen Werkzeugwechsel zu ermöglichen. Die Werkzeugwechslergruppe (10) sitzt hierfür beispielsweise am freien Ende eines als kinematische Kette aufgebauten Industrieroboters. Das Werkzeug kann beispielsweise ein Handhabungswerkzeug, z.B. ein Greifer oder ein Arbeitswerkzeug, z.B. ein Bohrwerkzeug sein.

Die Werkzeugwechslergruppe (10) hat zwei Fügeteile (20, 80), die in der Darstellung der Figuren 1 und 2 miteinander gefügt sind. Ein erstes dieser Fügeteile (20) ist im Folgenden als Festteil (20) bezeichnet. Das zweite Fügeteil (80) ist im Folgenden als Losteil (80) bezeichnet. Das jeweilige Losteil (80) ist austauschbar am Festteil (20) fixiert. Sowohl das Festteil (20) als auch das Losteil (80) haben jeweils eine zumindest annähernd zylindrische Hüllkontur mit gleichem Durchmesser. Die Mittellinie (14) dieser Hüllkonturen ist in der Längsrichtung (15) der Werkzeugwechslergruppe (10) orientiert. Beim Trennen der Fügeteile (20, 80) werden das Losteil (80) und das Festteil (20) in der Längsrichtung (15) auseinandergefahren.

Das Festteil (20) hat einen Befestigungsflansch (21), mit dem es z.B. an einem Arm des Industrieroboters befestigbar ist. Zur Befestigung dienen z.B. drei Befestigungsschrauben (22), die in der Darstellung der Figur 1 aus dem Befestigungsflansch (21) herausragen. Eine Flachdichtung (23) auf dem Befestigungsflansch (22) dichtet das Festteil (20) zum Industrieroboter hin ab.

An seiner Mantelfläche (24) hat das Festteil (20) einen Energieanschluss (25). Die dargestellte Kabelmuffe (26) des Energieanschlusses (25) besteht beispielsweise aus einem Kunststoff oder aus einem austenitischen Stahl. Es ist auch denkbar, den Energieanschluss (25) des Festteils (20) im Befestigungsflansch (21) auszubilden. Auch ein alternativer oder ergänzender Einsatz zweier Energieanschlüsse (25) ist denkbar.

In den Darstellungen der Figuren 1, 2 und 5 sind an der Mantelfläche (24) des Festteils (20) z.B. drei Sicherungsschrauben (27) angeordnet. Diese sind im Gehäuse (31) eingeschraubt. Gegebenenfalls können die Sicherungsschrauben (27) verliersicher am Gehäuse (31) des Festteils (20) angeordnet sein. Die Sicherungsschrauben (27) können zu Wartungszwecken im Innenraum (28) des Festteils (20) gelöst werden. Anstatt der Sicherungsschrauben (27) können - abhängig vom Aufbau des Festteils (20) - Verschlusskappen vorgesehen sein, die einen Werkzeugzugang in den Innenraum (28) des Festteils (20) ermöglichen.

Das Losteil (80) ist das werkzeugtragende Fügeteil (80). Es hat eine Werkzeugaufnahme (81), vgl. Figur 2, in die beispielsweise ein Werkzeugschaft einführbar ist. In der Werkzeugaufnahme (81) kann eine Werkzeugpositionierung vorgesehen sein, um z.B. die Winkellage des Werkzeugs relativ zum Losteil (80) festzulegen.

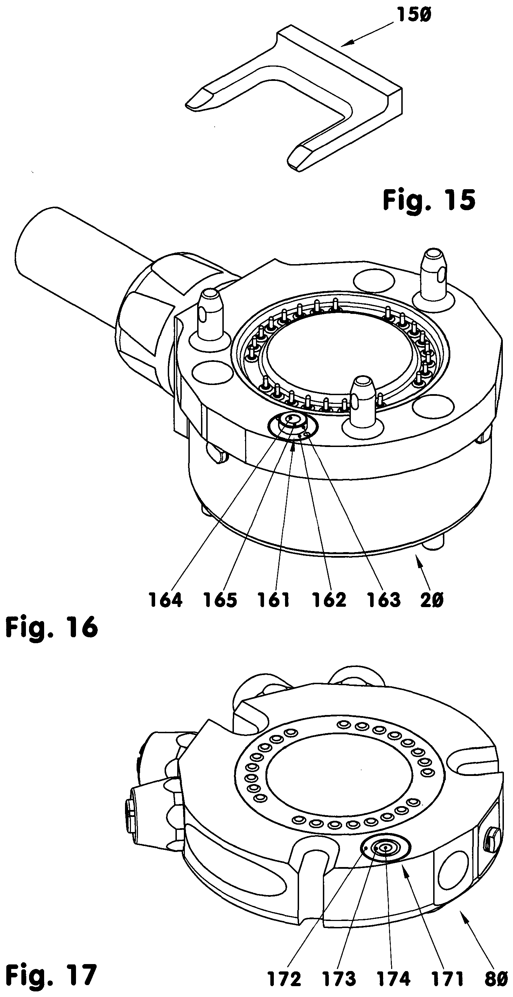

An seiner Mantelfläche (83) hat das Losteil (80) zwei einander gegenüberliegende Aufnahmenuten (82). Mit diesen Aufnahmenuten (82) ist das Losteil (80) in einer Losteilaufnahme (150) eines Magazins, vgl. Figur 15, aufnehmbar. Zur Sicherung des Losteils (80) in der z.B. U-förmig ausgebildeten Losteilaufnahme (150) hat das Losteil (80) an seiner Mantelfläche (83) einen Sicherungsmagneten (84). Dieser ist beispielsweise als Permanentmagnet ausgebildet.

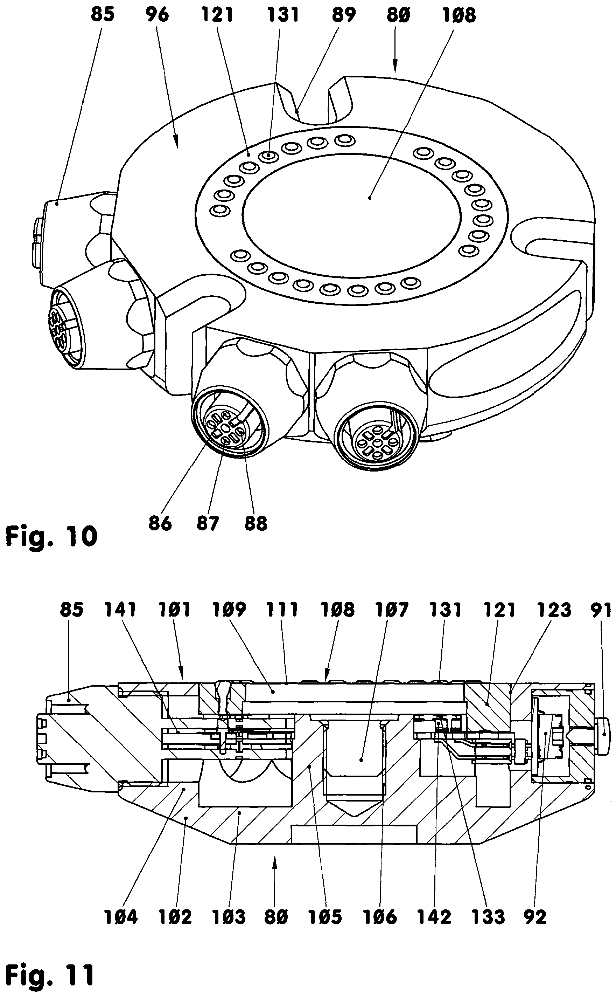

In den Figuren 2 und 10 sind an der Mantelfläche (83) des Losteils (80) vier elektrische Anschlüsse (85) angeordnet. Diese sind im Ausführungsbeispiel als Anschlüsse nach IEC 61131-9 ausgebildet. Über diesen elektrischen Anschlüssen (85) können Daten, Signale und/oder elektrische Ströme übertragen werden. Die elektrischen Ströme, Daten und/oder Signale dienen z.B. der Ansteuerung und/oder Abfrage losteilseitiger Sensoren und/oder Aktoren.

Die elektrischen Anschlüsse (85) sind in den genannten Darstellungen gleichartig als fünfpolige M 12-Buchsen ausgebildet. Im Ausführungsbeispiel sind hiervon jeweils nur drei Pole (86 - 88) belegt. Ein erster Pol (86) dieser Pole (86 - 88) dient der Übertragung einer positiven Spannung von z.B. 24 V. Am zweiten Pol (87) der Schnittstelle liegt eine Spannung von 0 Volt an. Ein dritter Pol (88) ist Teil einer Schalt- und/oder Kommunikationsleitung. Über diese Schnittstelle können die einzelnen Aktoren und/oder Sensoren beispielsweise mit Strömen von bis zu 200 Milliampere versorgt werden.

Die an die elektrischen Anschlüsse (85) anschließbaren Leitungen können drei- bis fünfadrige ungeschirmte Leitungen sein. Für den Betrieb der Aktoren und/oder Sensoren kann im Losteil (80) eine Mastereinheit vorgesehen sein. An diese sind die einzelnen Aktoren und Sensoren über die elektrischen Anschlüsse (85) und die genannten Leitungen in Form einer bidirektionalen Punkt-zu-Punkt-Verbindung angeschlossen.

Die Mantelfläche (83) des Losteils (80) hat beispielsweise drei in der Längsrichtung (15) orientierte Längsnuten (89).

Diese sind unregelmäßig auf einem gemeinsamen Teilkreis angeordnet, der in einer Ebene normal zur Längsrichtung (15) liegt. In jeder dieser Längsnuten (89) sitzt bei gefügter Werkzeugwechslergruppe (10) jeweils ein Zentrierzapfen (29) des Festteils (20).

Die Längsnuten (89) können am Festteil (20) angeordnet sein. In diesem Fall trägt das Losteil (80) die Zentrierzapfen (29). Auch ist es denkbar, z.B. zwei Zentrierzapfen (29) am Festteil (20) und einen Zentrierzapfen (29) am Losteil (80) anzuordnen. Am jeweiligen anderen Fügeteil (80; 20) sind dann die Längsnuten (89) ausgebildet.

Ein Verschlussstopfen (91) an der Mantelfläche (83) ermöglicht den Zugang zu einem Codierschalter (92), der im Innenraum (93) des Losteils (80) angeordnet ist. Dieser Codierschalter (92) trägt beispielsweise werkzeugspezifische Informationen, sodass bei gefügter Werkzeugwechslergruppe (10) das Werkzeug eindeutig identifizierbar ist. Gegebenenfalls kann der Codierschalter (92) einstellbar ausgebildet sein.

An der Werkzeugseite (94) des Losteils (80) sind beispielsweise drei Verschlusskappen (95) z.B. verliersicher angeordnet. Bei geöffneten Verschlusskappen (95) kann ein Werkzeug in den Innenraum (93) des Losteils (80) eingeführt werden.

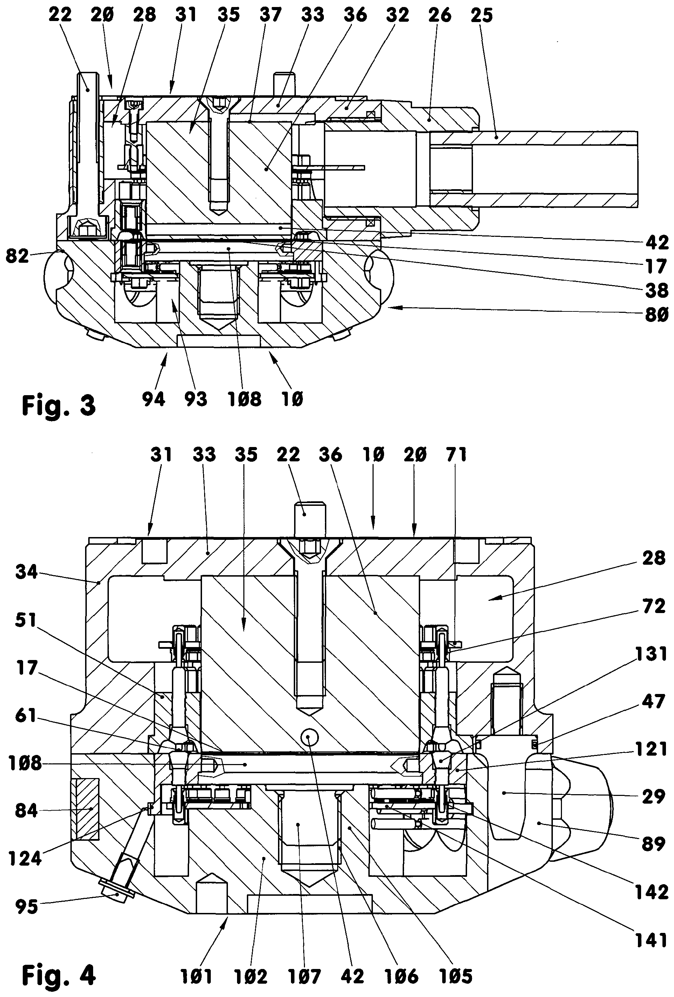

Die Figuren 3 und 4 zeigen zwei Schnittdarstellungen der Werkzeugwechslergruppe (10) Die beiden Schnittebenen der Darstellungen sind in Bezug auf die Längsrichtung (15) um 90 Grad zueinander versetzt. Hierbei durchdringt die Schnittebene der Figur 3 den Energieanschluss (25) des Festteils (20).

Der Innenraum (28) des Festteils (10) ist mittels eines Gehäuses (31) begrenzt. Das Gehäuse (31) hat einen topfförmig ausgebildeten Gehäusekörper (32). Der Boden (33) des Gehäusekörpers (32) bildet den Befestigungsflansch (22) des Festteils (20). In der Wandung (34) des Gehäusekörpers (32) sitzen die Befestigungsschrauben (22). Am Gehäusekörper (32) ist der Energieanschluss (25) befestigt.

Der Gehäusekörper (32) ist im Ausführungsbeispiel aus einem thermoplastischen Kunststoff, z.B. Polyetheretherketon (PEEK) hergestellt. Dieser Werkstoff hat ist beständig gegenüber Chemikalien, wie z.B. nicht oxidierende Säuren, Laugen, Reinigungsmittel, Salzlösungen und Paraffine. Er ist temperaturbeständig bis etwa 300 Grad Celsius. Der Werkstoff hat eine hohe Verschleißfestigkeit und gute Gleiteigenschaften. Er kann im Spitzgussverfahren verarbeitet werden. Das Bauteil kann nach dem Urformen mechanisch bearbeitet werden. Im Ausführungsbeispiel ist der Mittenrauwert Rₐ der Gehäuseoberfläche kleiner als 0,8 Mikrometer. Der Mittenrauwert Ra ist der arithmetische Mittelwert der absoluten Beträge des Abstandes des Rauheitsprofils von der mittleren Linie innerhalb der Messstrecke. Der Reibbeiwert des Werkstoffs gegen Stahl liegt beispielsweise bei 0,47.

Am Boden (33) ist ein Fügemagnet (35) befestigt. Dieser hat z.B. eine zylindrische Hüllkontur. Seine in der Längsrichtung (15) orientierte Höhe entspricht beispielsweise der Höhe der Wandung (34) des Gehäusekörpers (32) in dieser Richtung. Der Fügemagnet (35) hat als Grundkörper einen Permanentmagneten (36). Der Permanentmagnet (36) ist z.B. aus Neodym-Eisen-Bor (Nd₂Fe₁₄B) und weitere Legierungsbestandteile in einem pulvermetallurgischen Verfahren hergestellt. Auch der Einsatz von Samarium-Kobalt oder eines anderen Werkstoffs zur Herstellung des Permanentmagneten (36) ist denkbar.

Beispielsweise liegt einer der Magnetpole (37; 38) am Boden (33) an. Der andere Magnetpol (38; 37) ist dem Boden (33) abgewandt. Auch eine andere Position der Magnetpole (37; 38) ist denkbar. Die dem Boden (33) abgewandte Stirnfläche des Fügemagneten (35) ist als Planfläche ausgebildet. Im Ausführungsbeispiel liegt sie in einer Normalenebene zur Längsrichtung (15).

Die Stirnfläche (39) des Fügemagneten (35) wird durch eine Beschichtung (41) des Permanentmagneten (36) gebildet. Die Dicke der Beschichtung (41) beträgt beispielsweise zwei bis 5 Mikrometer. Diese Beschichtung (41) besteht im Ausführungsbeispiel aus einem amorphem Kohlenstoff, der in einem plasmaunterstützen chemischen Gasphasenabscheidungsverfahren aufgebracht wird. Hierbei bilden sich mikro- oder nanokristalline Schichten. Diese Beschichtung (41) hat bei hoher Härte einen Reibbeiwert gegen Stahl von z.B. 0,1. Die Beschichtung (41) ist dehäsiv ausgebildet, sodass beispielsweise der Wasserkontaktwinkel bis zu 90 Grad beträgt. Die Beschichtung (41) kann auch mittels eines anderen Verfahrens, beispielsweise einem physikalischen Dampfabscheidungsverfahren, einem Ionenstrahlverfahren, etc. aufgebracht werden. Der Mittenrauwert Rₐ der Beschichtung (41) entspricht beispielsweise dem oben genannten Mittenrauwert des Gehäusekörpers (32). Der Werkstoff der Beschichtung (41) ist chemisch weitgehend inert.

In einem der Fügeteile (20, 80) ist eine zuschaltbare Magnetfeld-Erzeugungsvorrichtung (42) angeordnet. Die Magnetfeld-Erzeugungsvorrichtung (42) kann in den Arbeitsbereich des bestehenden Magnetfelds des Fügemagneten (35) zuschaltbar sein, sodass sich im zugeschalteten Zustand die beiden Magnetfelder überlagern. Die zuschaltbare Magnetfeld-Erzeugungsvorrichtung (42) kann z.B. einen anhebbaren Permanentmagneten, einen stationären stromdurchflossenen Leiter, etc. aufweisen.

Im Ausführungsbeispiel ist im Fügemagneten (42) eine einschaltbare elektrische Magnetfeld-Erzeugungsvorrichtung (42) angeordnet. Dies ist beispielsweise mindestens ein elektrischer Leiter, der den Fügemagneten (35) durchdringt. Auch eine Ausführung des elektrischen Leiters als Spule ist denkbar. Bei ausgeschalteter Magnetfeld-Erzeugungsvorrichtung (42) ist das Magnetfeld des Permanentmagneten (36) unbeeinflusst. Sobald die Magnetfeld-Erzeugungsvorrichtung (42) eingeschaltet wird, durchfließt ein Strom den elektrischen Leiter. Um diesen elektrischen Leiter baut sich ein Magnetfeld auf, das das Magnetfeld des Permanentmagneten (36) überlagert. Bei einander entgegengesetzter Richtung der Magnetfelder wird das Magnetfeld des Permanentmagneten (36) geschwächt. Bei gleicher Stärke der beiden Magnetfelder heben diese sich gegenseitig auf. Die Einschaltdauer der elektrischen Magnetfeld-Erzeugungsvorrichtung (42) beträgt z.B. maximal 30% eines Zeitintervalls.

Anstatt im Fügemagneten (35) kann die elektrische Magnetfeld-Erzeugungsvorrichtung (42) auch z.B. als Spule um den Fügemagneten (35) herum angeordnet sein. Auch kann die Magnetfeld-Erzeugungsvorrichtung (42) als Elektromagnet ausgebildet sein. Die elektrische Magnetfeld-Erzeugungsvorrichtung (42) kann entweder in demselben Fügeteil (20; 80) wie der der Fügemagnet (35) oder im jeweils anderen Fügeteil (80; 20) angeordnet sein. Auch ist es denkbar, in beiden Fügeteilen (20; 80) elektrische Magnetfeld-Erzeugungsvorrichtungen (42) anzuordnen. Der Fügemagnet (35) kann alternativ im Losteil (80) angeordnet sein. Auch kann im Losteil (80) ein zusätzlicher Fügemagnet vorgesehen sein.

Um den Fügemagneten (35) herum ist z.B. koaxial eine Tragringeinheit (51) angeordnet. Die Tragringeinheit (51) hat einen Tragring (52), in dem elektrische Kontaktelemente (61) sitzen. Der Tragring (52) hat die Gestalt eines entlang einer Umfangslinie gebogenen Stabes. Die Umfangslinie kann hierbei geschlossene oder weitgehend geschlossen sein. Die in der Längsrichtung (15) projizierte Gestalt des Tragrings (52) kann kreisförmig, elliptisch, oval, dreieckig, viereckig, etc. ausgebildet sein.

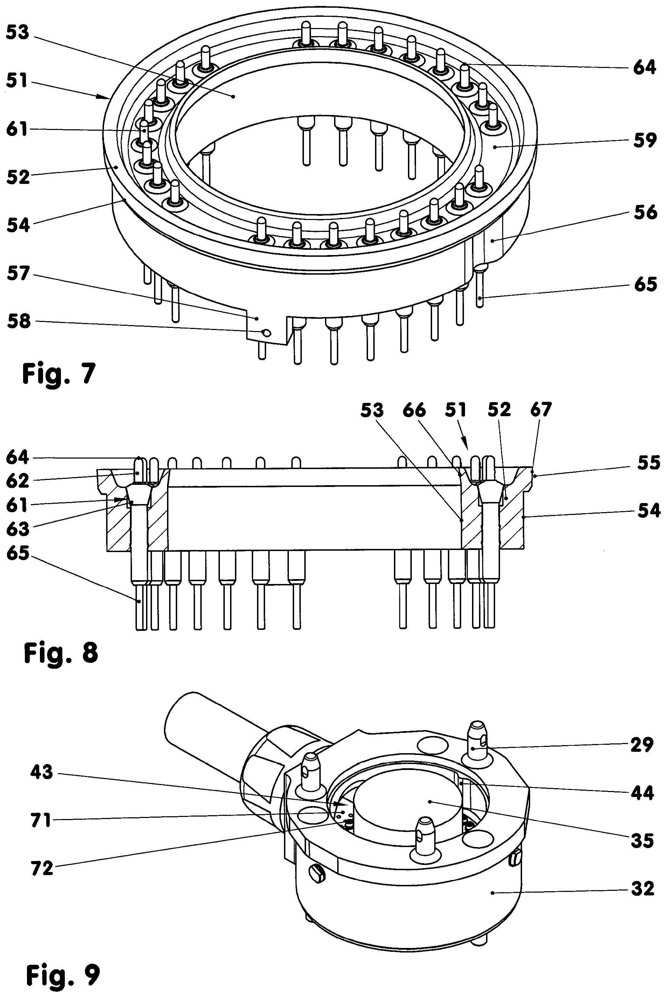

Der Tragring (52) besteht aus einem thermoplastischen Kunststoff. Im unbelasteten Zustand, vgl. Figuren 7 und 8, sind die innere Mantelfläche (53) und die äußere Mantelfläche (54) mit einem konischen Abschnitt (55) ausgebildet. Die Länge des konischen Abschnitts (55) in der Längsrichtung (15) beträgt beispielsweise zwischen 20 % und 25 % der Länge des Tragrings (52) in dieser Richtung. Die in Richtung der Fügeseite (45) orientierte Aufweitung des konischen Abschnitts (55) beträgt im Ausführungsbeispiel 6 Grad. Der konische Abschnitt (55) bildet zwei integrierte Klemm- und Dichtelemente (66, 67) der Tragringeinheit (51). Eines der Klemm- und Dichtelemente (66; 67) ist an der Innenringfläche (53), das andere Klemm- und Dichtelement (67; 66) an der Außenringfläche (54) angeordnet. Im montierten Zustand ist die Tragringeinheit (51) in einen Ringraum (43) zwischen dem Fügemagneten (35) und dem Gehäusekörper (32) kraftschlüssig eingepresst, vgl. Figur 9. Die Tragringeinheit (51) wird hierbei mittels einer Zentriernut (56) an einer Gehäusenase (44) des Gehäusekörpers (32) zentriert. Am Tragring (52) sind drei Haltenasen (57) angeformt, die in die von der Kontaktzone (17) der Fügeteile (20, 80) angewandte Richtung zeigen. Bei montierter Tragringeinheit (51) fixieren die Sicherungsschrauben (27) die Tragringeinheit (51) formschlüssig in Fixierbohrungen (58) der Haltenasen (57). Bei montierter Tragringeinheit (51) dichtet der konische Abschnitt (55) das Gehäuse (31) zwischen dem Gehäusekörper (32) und dem Fügemagneten (35) gegen das Eindringen staubartiger Partikel und Flüssigkeiten auch beim Eintauchen in eine Flüssigkeit ab.

Der Tragring (52) hat eine in Richtung der Kontaktzone (17) orientierte Umlaufnut (59). In dieser sitzen abgedichtet beispielsweise 24 Kontaktelemente (61). Diese sind auf einem gemeinsamen Teilkreis in Gruppen zu jeweils z.B. 8 Kontaktelementen (61) angeordnet. Jedes der Kontaktelemente (61) hat einen z.B. federbelasteten Kontaktstift (62), der abgedichtet in einer Führungshülse (63) geführt ist. Der einzelne Kontaktstift (62) hat eine abgerundete Kontaktspitze (64). In der Darstellung der Figur 8 liegen alle Kontaktspitzen (64) dieser Tragringeinheit (51) in einer gemeinsamen Ebene. Diese Ebene liegt normal zur Längsrichtung (15). Alle Kontaktelemente (61) durchdringen den Tragring (52) in der Längsrichtung (15). Auf der der Kontaktzone (17) abgewandten Seite der Tragringeinheit (51) hat jedes Kontaktelement (61) ein beispielsweise federbelastetes, z.B. abgedichtet geführtes Steckerelement (65). Dieses ragt aus dem Tragring (52) heraus.

Im Gehäuse (31) des Festteils (20) ist eine Platine (71) angeordnet. Diese Platine (71) trägt in Richtung der Tragringeinheit (51) orientierte Kontaktmuffen (72). Bei montiertem Festteil (20) sitzt jeweils ein Steckerelement (65) in einer Kontaktmuffe (72). Die einzelne Kontaktmuffe (72) hat beispielsweise eine in radialer Richtung orientierte federbelastete Kontaktnase, sodass das Steckerelement (65) und die Kontaktmuffe (72) eine elektrisch leitfähige Steckverbindung bilden. An der Platine (71) münden die vom Energieanschluss (25) kommenden elektrischen Leitungen. Auf der Platine (71) kann ein Rechner- und Speichermodul angeordnet sein. Dieses kann auch als Mastereinheit für an das Festteil (20) und/oder an das Losteil (60) angeschlossene Sensoren und/oder Aktoren ausgebildet sein.

Die Zentrierzapfen (29) sind an der an der Kontaktzone (17) angrenzenden Fügeseite (45) des Gehäuses (31) angeordnet. Im Ausführungsbeispiel sind sie in den Gehäusekörper (32) eingeschraubt. Hierfür haben sie zwei einander gegenüberliegende Schlüsselflächen (46). Die auskragende Spitze des einzelnen Zentrierzapfens (29) ist kegelstumpfförmig ausgebildet. Der gedachte Spitzenwinkel des Kegels beträgt beispielsweise 30 Grad. Ein O-Ring (47) im Gehäusekörper (32) verhindert das Eindringen von Verschmutzungen oder Feuchtigkeit.

Mindestens einer der Zentrierzapfen (29) kann als Reinigungsdüse ausgebildet sein. Er hat dann beispielsweise einen innenliegenden Flüssigkeitskanal, der in eine Düsenöffnung mündet. Beispielsweise ist die Düsenöffnung auf die Fügeseite (45) des Festteils (20) und/oder - vor dem Fügen - auf die Fügeseite (96) des Losteils (80) gerichtet.

An der Fügeseite (45) des Gehäusekörpers (32) sind z.B. drei Abdeckkappen (48) eingesetzt. Nach dem Öffnen dieser Abdecckappen (48) sind die Befestigungsschrauben (22) zugänglich.

Die Figuren 10 bis 14 zeigen das Losteil (80). Das Losteil (80) hat ein Losteilgehäuse (101). Dieses hat einen Grundkörper (102), der beispielsweise aus dem gleichen Werkstoff hergestellt ist wie der Gehäusekörper (32) des Festteils (20). Auch die Oberflächengüte entspricht der Oberflächengüte des Festteils (20). Der Grundkörper (102) ist topfartig mit einem Losteilboden (103) und einer Losteilwandung (104) ausgebildet. Zentral im Boden sitzt ein Tragzapfen (105) mit einem Innengewinde (106) in dieses Innengewinde (106) ist ein Gewindezapfen (107) einer Ankerplatte (108) eingeschraubt. Die Ankerplatte (108) ist scheibenförmig mit kreisförmigem Querschnitts ausgebildet. Im montierten Losteil (80) begrenzt sie das Losteilgehäuse (101) in Richtung der Kontaktzone (17).

Die Ankerplatte (108) hat einen beschichteten Ankerplatten-Grundkörper (109). Der Ankerplatten-Grundkörper (109) besteht im Ausführungsbeispiel aus einem ferritischen Edelstahl, z.B. X6Cr17 mit der Werkstoffnummer 1.4016, X2CrTiNb18 mit der Werkstoffnummer 1.4509, etc. Diese Stähle haben eine gute Korrosionsbeständigkeit, sie sind beständig gegen Medien mit geringer Aggressivität und haben eine ferritische Mikrostruktur. Diese Werkstoffe sind magnetisierbar.

Die Ankerplattenbeschichtung (111) ist so ausgebildet wie die Beschichtung (41) des Fügemagneten (35). Beispielsweise liegt ihre Dicke in dem im Zusammenhang mit dem Festteil (20) genannten Bereich.

Im Ringraum (112) zwischen der Ankerplatte (108) und dem Losteil-Grundkörper (102) sitzt abdichtend eine Tragringeinheit (121). Diese hat einen Tragring (122), den Gegenkontaktelemente (131) durchdringen. Der Losteil-Tragring (122) hat beispielsweise in einer Draufsicht in Richtung der Längsrichtung (15) die gleichen Abmessungen wie der Tragring (52) des Festteils (20). Die beiden Tragringeinheiten (51, 121) sind damit in dieser Richtung kongruent zueinander. Der Losteil-Tragring (122) hat einen konischen Abschnitt (123), der in Richtung der Fügeseite (96) aufgeweitet ist. Sowohl an seiner Innenringfläche (134), als auch an seiner Außenringfläche (135) hat der Tragring (122) jeweils ein integriertes Klemm- und Dichtelement (127; 128) der Tragringeinheit (121). Mittels dieses konischen Abschnitts (123) ist die Tragringeinheit (121) im Ringraum (112) kraftschlüssig gehalten.

An seiner der Fügeseite (96) abgewandten Seite sind an den Tragring (122) z.B. drei Rasthaken (124) angeformt. Diese sind beispielsweise gleichmäßig am Umfang des Tragrings (122) verteilt. Die Rastelemente (125) der Rasthaken (124) zeigen nach außen. Im montierten Zustand hintergreifen sie den Grundkörper (102). Sie sichern formschlüssig die Tragringeinheit (121) im Losteilgehäuse (101). Im Grundkörper (102) ist die Lage der Tragringeinheit (121) mittels einer Zentriernut (126) und einer Zentriernase (113) bestimmt.

Die z.B. 24 Gegenkontaktelemente (131) sitzen auf einem gemeinsamen Teilkreis, dessen Durchmesser dem Durchmesser des Teilkreises des Festteils (20) entspricht. Sie sind beispielsweise in drei Gruppen zu jeweils acht Gegenkontaktelementen (131) angeordnet. Die Gegenkontaktelemente (131) haben an ihrem zur Fügeseite (96) zeigenden freien Ende eine Anschlagfläche (132). In der Darstellung der Figur 11 ragen diese geringfügig über die Ankerplatte (108) hinaus. Auf der der Fügeseite (96) abgewandten Seite sind die Gegenkontaktelemente (131) so ausgebildet wie die Kontaktelemente (61) des Festteils (20).

Im Losteil (80) ist eine Losteilplatine (141) angeordnet. Diese trägt Kontaktbuchsen (142), die beispielsweise identisch ausgebildet und angeordnet sind wie die Kontaktmuffen (72) der Festteilplatine (71). An der Losteilplatine (141) sind die elektrischen Leiter der elektrischen Anschlüsse (85) befestigt. Weiterhin trägt die Losteilplatine (141) den Codierschalter (92). Auf der Losteilplatine (141) kann auch eine datenverarbeitende und/oder datenspeichernde Mastereinheit angeordnet sein. Diese steuert beispielsweise an den elektrischen Anschlüssen (85) angeordnete Aktoren und verarbeitet und/oder speichert die Daten von Sensoren.

Im zusammengebauten Zustand ist das Losteil (80) sowohl gegen das Eindringen staubartiger Partikel als auch beim Eintauchen in eine Flüssigkeit gegen das Eindringen von Flüssigkeit geschützt. Die Oberflächengüte des Losteils (80) verhindert außerdem ein Anhaften von Partikeln.

Zum Betrieb der Werkzeugwechslergruppe (10) wird das Festteil (20) an einem auskragenden Arm eines Industrieroboters befestigt. Dies erfolgt z.B. mittels der Befestigungsschrauben (22). Der Energieanschluss (25) wird mit dem Industrieroboter verbunden.

Das Losteil (80) mit einem Werkzeug sitzt zunächst in der Losteilaufnahme (150) eines Werkzeugmagazins. Hierbei zeigt die Werkzeugseite (94) nach unten. Um das Losteil (80) aufzunehmen, wird der Arm des Industrieroboters so verfahren, dass das Festteil (20) direkt über dem Losteil (80) steht. Hierbei fluchten die Zentrierzapfen (29) mit den Längsnuten (89). Die elektrische Magnetfeld-Erzeugungsvorrichtung (42) ist ausgeschaltet.

Beim Absenken des Festteils (20) kontaktiert beispielsweise der Fügemagnet (35) die Ankerplatte (108). Gegebenenfalls können alternativ oder ergänzend der Gehäusekörper (32) des Festteils (20) am Losteil-Grundkörper (102) zur Anlage kommen. Die Zentrierzapfen (29) tauchen in die Längsnuten (89) ein. Die Kontaktelemente (61) kontaktieren federbelastet die Gegenkontaktelemente (131). Damit ist das Losteil (80) mechanisch und elektrisch mit dem Festteil (20) verbunden. Die Kontaktzone (17) ist geschlossen. Dies kann gegebenenfalls mittels eines Sensors geprüft werden. Hierbei kann auch eine abgedichtete gas- und/oder flüssigkeitsführende Verbindung zwischen dem Festteil (20) und dem Losteil (80) hergestellt werden. Die Abfrage des Codierschalters (92) bestätigt der übergeordneten Steuerung die korrekte Verbindung zwischen den beiden Fügeteilen (20, 80) und die Aufnahme des korrekten Losteils (80).

Die Kontaktzone (17) zwischen den beiden Fügeteilen (20, 80) liegt im Ausführungsbeispiel in einer normal zur Längsrichtung (15) orientierten Ebene. Die Kontaktzone (17) kann jedoch auch bereichsweise gewölbt, schräg, etc. ausgebildet sein. Beispielsweise kann die Zentrierung der beiden Fügeteile (20, 80) in der Kontaktzone (17) erfolgen.

Um die beiden Fügeteile (20, 80) voneinander zu trennen, wird das Losteil (80) beispielsweise in die Losteilaufnahme (150) eingeführt und mittels des Sicherungsmagneten (84) gesichert.

Im Festteil (20) wird die elektrische Magnetfeld-Erzeugungsvorrichtung (42) mit Gleichstrom beaufschlagt, sodass das in der Kontaktzone (17) bestehende Permanentmagnetfeld des Fügemagneten (35) geschwächt wird. Der Industrieroboter kann nun das Festteil (20) vom Losteil (80) abheben. Das Losteil (80) verbleibt in der Losteilaufnahme (150).

Um die Tragringeinheit (51) des Festteils (20) zu wechseln, werden die Sicherungsschrauben (27) gelöst. Die Sicherungsschrauben (27) kommen außer Eingriff mit den Haltenasen (57) der Festteil-Tragringeinheit (51). Die Tragringeinheit (51) kann nun aus dem Festteil (20) herausgezogen werden.

Zum Einsetzen einer neuen Tragringeinheit (51) wird diese so an das Festteil (20) angesetzt, dass die Zentriernut (56) mit der Gehäusenase (44) fluchtet. Anschließend wird die Tragringeinheit (51) in das Festteil (20) eingeschoben, bis der Tragring (52) bündig mit dem Gehäusekörper (32) liegt. Hierbei werden die Klemm- und Dichtelemente (66, 67) elastisch verformt. Nun können die Sicherungsschrauben (27) wieder eingeschraubt werden. Beim Einschieben der Tragringeinheit (51) tauchen die Steckerelemente (65) in die Kontaktmuffen (72) ein und werden dort kraftschlüssig gehalten.

Zum Wechseln der Tragringeinheit (121) des Losteils (80) werden die Verschlusskappen (95) geöffnet. Mit einem Werkzeug, z.B. einem Flachschraubendreher, werden die Rasthaken (124) aus ihrer Arretierstellung gelöst. Die Tragringeinheit (121) mit den Gegenkontaktelementen (131) kann nun aus Losteilgehäuse (101) herausgezogen werden. Anschließend kann z.B. werkzeuglos eine neue Tragringeinheit (121) eingesetzt werden. Beim Einschieben verrasten die Rasthaken (124) im Losteilgehäuse (101). Die Klemm- und Dichtelemente (127, 128) werden elastisch verformt. Hierbei werden die Steckerelemente (133) mit den Kontaktbuchsen (142) elektrisch verbunden. Die neue Tragringeinheit (121) kann beispielsweise eine geringere Anzahl oder eine andere Anordnung von Gegenkontaktelementen (131) aufweisen.

Die Figur 16 zeigt ein erstes Fügeteil (20) mit einem ersten Medienkupplungsteil (161). Dieses erste Medienkupplungsteil (161) ist beispielsweise im Gehäusekörper (32) des ersten Fügeteils (20) angeordnet. Es steht in der Längsrichtung (15) aus diesem heraus. Das erste Medienkupplungsteil (161) hat ein rohrförmiges Führungsteil (162), das im Gehäusekörper (32) befestigt ist. In diesem ist ein topfförmig ausgebildetes Verschlussteil (163) in der Längsrichtung (15) verschiebbar geführt. Das Verschlussteil (163) hat eine stirnseitige Einsenkung (164), die von einem Verschlussteilring (165) umgeben ist. Bei voneinander getrennten Fügeteilen (20, 80) ist das erste Medienkupplungsteil (161) geschlossen.

In der Figur 17 ist ein zweites Fügeteil (80) mit einem zweiten Medienkupplungsteil (171) dargestellt. Das zweite Medienkupplungsteil (171) ist auf der Fügeseite (96) im Grundkörper (102) des zweiten Fügeteils (80) angeordnet. Es ist beispielsweise bündig mit dem Losteilgehäuse (101). Das zweite Medienkupplungsteil (171) hat ein im Losteilgehäuse (101) befestigtes Rohrelement (172), in dem eine verschiebbare Verschlusshülse (173) und ein zentraler, feststehender Dorn (174) angeordnet sind. Die Verschlusshülse (173) ist in der Längsrichtung (15) federbelastet. Bei voneinander getrennten Fügeteilen (20, 80) ist das zweite Medienkupplungsteil (171) geschlossen.

Vor dem Fügen der beiden Fügeteile (20, 80) fluchten die beiden Fügeteile (20, 80) miteinander. Beim Fügen kontaktiert der Dorn (174) die Einsenkung (164) des Verschlussteils (163), sodass bei weiterer Annäherung der Fügeteile (20, 80) das Verschlussteil (163) unter Belastung der Verschlussteilfeder in der Längsrichtung (15) verschoben wird. Gleichzeitig legt sich das Verschlussteil (163) mit dem Verschlussteilring (165) an die Verschlusshülse (173) an und verschiebt diese entgegen der Kraft der Verschlusshülsenfeder. Beide Medienkupplungsteile (161, 171) werden geöffnet. Sie bilden jetzt eine Medienkupplung (161, 171) zwischen den Fügeteilen (20, 80). Diese Medienkupplung (161. 171) kann beispielsweise zum Übertragen gasförmiger oder flüssiger Medien eingesetzt werden.

Auch Kombinationen der einzelnen Ausführungsbeispiele sind denkbar.

### Bezugszeichenliste:

- 10: Werkzeugwechslergruppe
- 14: Mittellinie
- 15: Längsrichtung
- 16: Fügerichtung
- 17: Kontaktzone

- 20: Fügeteil, erstes Fügeteil, Festteil
- 21: Befestigungsflansch
- 22: Befestigungsschrauben
- 23: Flachdichtung
- 24: Mantelfläche
- 25: Energieanschluss
- 26: Kabelmuffe
- 27: Sicherungsschrauben
- 28: Innenraum von (20)
- 29: Zentrierzapfen

- 31: Gehäuse von (20)
- 32: Gehäusekörper
- 33: Boden von (32)
- 34: Wandung von (32)
- 35: Fügemagnet
- 36: Permanentmagnet
- 37: Magnetpol
- 38: Magnetpol
- 39: Stirnfläche von (35)

- 41: Beschichtung
- 42: Magnetfeld-Erzeugungsvorrichtung, elektrisch
- 43: Ringraum
- 44: Gehäusenase
- 45: Fügeseite
- 46: Schlüsselflächen von (29)
- 47: O-Ring an (29)
- 48: Abdeckkappen

- 51: Tragringeinheit, Festteil-Tragringeinheit
- 52: Tragring
- 53: innere Mantelfläche, Innenringfläche
- 54: äußere Mantelfläche, Außenringfläche
- 55: konischer Abschnitt
- 56: Zentriernut
- 57: Haltenasen
- 58: Fixierbohrungen von (58)
- 59: Umlaufnut

- 61: Kontaktelemente
- 62: Kontaktstifte
- 63: Führungshülse
- 64: Kontaktspitze
- 65: Steckerelement
- 66: Klemm- und Dichtelement
- 67: Klemm- und Dichtelement

- 71: Platine, Festteilplatine
- 72: Kontaktmuffen

- 80: Fügeteil, zweites Fügeteil, Losteil
- 81: Werkzeugaufnahme
- 82: Aufnahmenuten
- 83: Mantelfläche
- 84: Sicherungsmagnet
- 85: elektrische Anschlüsse
- 86: Pol von (85), +24Volt
- 87: Pol von (85), 0 Volt
- 88: Pol von (85), Schalt- und/oder Kommunikationsleitung
- 89: Längsnuten, Zentrieraufnahmen

- 91: Verschlusstopfen
- 92: Codierschalter
- 93: Innenraum von (80)
- 94: Werkzeugseite
- 95: Verschlusskappen
- 96: Fügeseite von (80)

- 101: Losteilgehäuse
- 102: Grundkörper
- 103: Losteilboden
- 104: Losteilwandung
- 105: Tragzapfen
- 106: Innengewinde
- 107: Gewindezapfen
- 108: Ankerplatte
- 109: Ankerplatten-Grundkörper

- 111: Ankerplattenbeschichtung
- 112: Ringraum
- 113: Zentriernase

- 121: Tragringeinheit, Losteil-Tragringeinheit
- 122: Tragring, Losteil-Tragring
- 123: Konischer Abschnitt
- 124: Rasthaken
- 125: Rastelemente
- 126: Zentriernut
- 127: Klemm- und Dichtelement
- 128: Klemm- und Dichtelement

- 131: Gegenkontaktelemente
- 132: Anschlagfläche
- 133: Steckerelemente
- 134: Innenringfläche
- 135: Außenringfläche

- 141: Losteilplatine
- 142: Kontaktbuchsen

- 150: Losteilaufnahme

- 161: erstes Medienkupplungsteil, Teil der Medienkupplung
- 162: Führungsteil, rohrförmig
- 163: Verschlussteil
- 164: Einsenkung
- 165: Verschlussteilring

- 171: zweites Medienkupplungsteil, Teil der Medienkupplung
- 172: Rohrelement
- 173: Verschlusshülse
- 174: Dorn

## Patentansprüche

1. Werkzeugwechslergruppe (10) mit zwei trennbar miteinander gegenseitig zentriert gefügten Fügeteilen (20, 80), wobei die beiden Fügeteile (20, 80) in einer Kontaktzone (17) mittels magnetischer Feldkraft mindestens eines einen Permanentmagneten (36) aufweisenden Fügemagneten (35) aneinandergepresst sind und wobei zumindest in einem der Fügeteile (20; 80) eine temporär zuschaltbare Magnetfeld-Erzeugungsvorrichtung (42) angeordnet ist, deren im zugeschalteten Zustand erzeugte Magnetfeldkraft zum Trennen der Fügeteile (20, 80) voneinander der magnetischen Feldkraft des Permanentmagneten (36) entgegengesetzt gerichtet ist, **dadurch gekennzeichnet,**
- **dass** in einem ersten der Fügeteile (20; 80) eine erste Tragringeinheit (51; 121) und in einem zweiten der Fügeteile (60; 20) eine zweite Tragringeinheit (121; 51), das jeweilige Fügeteil (20; 80) abdichtend, angeordnet sind,
- **dass** mindestens eine der Tragringeinheiten (51; 121) konzentrisch zu diesem Fügemagneten (35) diesen umgreifend angeordnet ist und
- **dass** die beiden Tragringeinheiten (51; 121) aneinander druckbelastet anliegende elektrische Kontaktelemente (61) und Gegenkontaktelemente (131) aufweisen, die die beiden Fügeteile (20, 80) elektrisch miteinander verbinden.

2. Werkzeugwechslergruppe (10) nach Anspruch 1, **dadurch gekennzeichnet, dass** die beiden Tragringeinheiten (51, 121) in einer Draufsicht normal zu einer Längsrichtung (15) der Werkzeugwechslergruppe (10) kongruent zueinander sind.

3. Werkzeugwechslergruppe (10) nach Anspruch 1, **dadurch gekennzeichnet, dass** die einzelne Tragringeinheit (51, 121) sowohl an einer Innenringfläche (53; 134) als auch an einer Außenringfläche (54; 135) eines Tragrings (52; 122) jeweils ein integriertes Klemm- und Dichtelement (66; 67; 127; 128) aufweist.

4. Werkzeugwechslergruppe (10) nach Anspruch 1, **dadurch gekennzeichnet, dass** die Kontaktelemente (61) und die Gegenkontaktelemente (131) abgedichtet in den Tragringeinheiten (51, 121) angeordnet sind.

5. Werkzeugwechslergruppe (10) nach Anspruch 1, **dadurch gekennzeichnet, dass** die einzelne Tragringeinheit (51; 121) herausnehmbar im jeweiligen Fügeteil (20; 80) angeordnet ist.

6. Werkzeugwechslergruppe (10) nach Anspruch 5, **dadurch gekennzeichnet, dass** die einzelne Tragringeinheit (51; 121) kraftschlüssig und formschlüssig im jeweiligen Fügeteil (20; 80) fixiert ist.

7. Werkzeugwechslergruppe (10) nach Anspruch 5, **dadurch gekennzeichnet, dass** jedes elektrische Kontaktelement (61) und jedes Gegenkontaktelement (131) mittels einer elektrischen Steckverbindung mit einer fest im jeweiligen Fügeteil (20, 80) angeordneten Platine (71; 141) verbunden ist.

8. Werkzeugwechslergruppe (10) nach Anspruch 1, **dadurch gekennzeichnet, dass** die Fügeteile (20, 80) mindestens eine diese verbindende Medienkupplung (161, 171) haben.

9. Werkzeugwechslergruppe (10) nach Anspruch 8, **dadurch gekennzeichnet, dass** bei voneinander getrennten Fügeteilen (20; 80) jedes der Fügeteile (20; 80) ein verschlossenes Medienkupplungsteil (161; 171) der Medienkupplung (161, 171) aufweist.

## Claims

1. A tool changer group (10) with two joining parts (20, 80), which are joined to one another in a separable and mutually centred manner, wherein the two joining parts (20, 80) are pressed against one another in a contact zone (17) by means of magnetic field force of at least one joining magnet (35) having a permanent magnet (36), and wherein there is arranged at least in one of the joining parts (20; 80) a temporarily activatable magnetic field generation device (42), the magnetic field force of which, generated in the activated state, is directed counter to the magnetic field force of the permanent magnet (36) in order to separate the joining parts (20, 80) from one another, **characterised in that**
- a first supporting ring unit (51; 121) is arranged in a first of the joining parts (20; 80), and a second supporting ring unit (121; 51) is arranged in a second of the joining parts (60; 20), sealing off the corresponding joining part (20; 80),
- at least one of the supporting ring units (51; 121) is arranged concentrically with and surrounding this joining magnet (35), and
- the two supporting ring units (51; 121) have electrical contact elements (61) and mating contact elements (131), which bear against one another under compressive load and connect the two joining parts (20, 80) electrically to one another.

2. The tool changer group (10) according to Claim 1, **characterised in that** the two supporting ring units (51, 121) are congruent with one another when viewed from above normally to a longitudinal direction (15) of the tool changer group (10).

3. The tool changer group (10) according to Claim 1, **characterised in that** the individual supporting ring unit (51, 121) has an integrated clamping and sealing element (66; 67; 127; 128) both on an inner ring face (53; 134) and on an outer ring face (54; 135) of a supporting ring (52; 122).

4. The tool changer group (10) according to Claim 1, **characterised in that** the contact elements (61) and the mating contact elements (131) are arranged in a sealed manner in the supporting ring units (51, 121).

5. The tool changer group (10) according to Claim 1, **characterised in that** the individual supporting ring unit (51; 121) is arranged removably in the corresponding joining part (20; 80).

6. The tool changer group (10) according to Claim 5, **characterised in that** the individual supporting ring unit (51; 121) is fixed force-fittingly and form-fittingly in the corresponding joining part (20; 80).

7. The tool changer group (10) according to Claim 5, **characterised in that** each electrical contact element (61) and each mating contact element (131) is connected by means of an electrical plug connection to a printed circuit board (71; 141) arranged fixedly in each joining part (20, 80).

8. The tool changer group (10) according to Claim 1, **characterised in that** the joining parts (20, 80) have at least one media coupling (161, 171) connecting them.

9. The tool changer group (10) according to Claim 8, **characterised in that**, when the joining parts (20; 80) are separated from one another, each of the joining parts (20; 80) has a closed media coupling part (161; 171) of the media coupling (161, 171).

## Revendications

1. Groupe de changeur d'outils (10), doté de deux pièces d'assemblage (20, 80), assemblées de manière désolidarisable l'une avec l'autre en étant réciproquement centrées, dans une zone de contact (17) les deux pièces d'assemblage (20, 80) étant pressées l'une contre l'autre au moyen d'une force de champ magnétique d'un aimant d'assemblage (35) comportant au moins un aimant permanent (36) et dans au moins l'une des pièces d'assemblage (20 ; 80) étant placé un dispositif générateur (42) d'un champ magnétique, commutable temporairement, dont la force magnétique générée lorsqu'il est commuté, destinée à séparer l'une de l'autre les pièces d'assemblage (20, 80) est opposée à la force de champ magnétique de l'aimant permanent (36), **caractérisé**
- **en ce que** dans une première des pièces d'assemblage (20 ; 80) est placée une première unité de bague porteuse (51 ; 121) et dans une deuxième des pièces d'assemblage (60; 20) est placée une deuxième unité de bague porteuse (121; 51), en assurant l'étanchéité de la pièce d'assemblage (20 ; 80),
- **en ce qu'**au moins l'une des unités de bague porteuse (51 ; 121) est placée de manière concentrique par rapport audit aimant d'assemblage (35), en entourant celui-ci et
- **en ce que** les unités de bague porteuse (51 ; 121) comportent des éléments de contact (61) et des contre-éléments de contact (131) électriques, adjacents en étant contraints par pression, qui connectent électriquement l'une avec l'autre les deux pièces d'assemblage (20, 80).

2. Groupe de changeur d'outils (10) selon la revendication 1, **caractérisé en ce que**, vues en élévation, les deux unités de bague porteuse (51, 121) sont réciproquement congruentes, à la normale d'une direction longitudinale (15) du groupe de changeur d'outils (10).

3. Groupe de changeur d'outils (10) selon la revendication 1, **caractérisé en ce qu'**aussi bien sur une surface interne (53 ; 134) de bague, que sur une surface externe (54 ; 135) de bague d'une bague porteuse (52; 122), l'unité de bague porteuse (51, 121) individuelle comporte respectivement un élément de serrage et d'étanchéité (66 ; 67 ; 127 ; 128) intégré.

4. Groupe de changeur d'outils (10) selon la revendication 1, **caractérisé en ce que** les éléments de contact (61) et les contre-éléments de contact (131) sont placés en étant étanchéifiés dans les unités de bague porteuse (51, 121).

5. Groupe de changeur d'outils (10) selon la revendication 1, **caractérisé en ce que** l'unité de bague porteuse (51 ; 121) individuelle est placée de manière amovible dans la pièce d'assemblage (20 ; 80) respective.

6. Groupe de changeur d'outils (10) selon la revendication 5, **caractérisé en ce que** l'unité de bague porteuse (51 ; 121) individuelle est fixée par complémentarité de force et par complémentarité de forme dans la pièce d'assemblage (20 ; 80) respective.

7. Groupe de changeur d'outils (10) selon la revendication 5, **caractérisé en ce que** chaque élément de contact (61) électrique et chaque contre-élément de contact (131) électrique est connecté au moyen d'une connexion électrique enfichable avec une carte de circuit imprimé (71 ; 141) placée fixement dans la pièce d'assemblage (20, 80) respective.

8. Groupe de changeur d'outils (10) selon la revendication 1, **caractérisé en ce que** les pièces d'assemblage (20, 80) disposent d'au moins un couplage des fluides (161, 171) les connectant l'une avec l'autre.

9. Groupe de changeur d'outils (10) selon la revendication 8, **caractérisé en ce que** lorsque les pièces d'assemblage (20 ; 80) sont séparées l'une de l'autre, chacune des pièces d'assemblage (20 ; 80) comporte une pièce (161 ; 171) de couplage des fluides fermée du couplage des fluides (161, 171).
